# EUROPÄISCHE PATENTSCHRIFT

(11) **EP 1 602 258 B1**
(45) Veröffentlichungstag und Bekanntmachung des Hinweises auf die Patenterteilung: **15.07.2009**
(21) Anmeldenummer: 04719363.6
(22) Anmeldetag: 11.03.2004
(51) Int. Cl.: H04W 8/18

(54) **VERFAHREN ZUM BEREITSTELLEN VON MIT EINER KENNUNG VERSEHENEN EINSTECKKARTEN IN EINEM MOBILFUNKENDGERÄT**
METHOD FOR MAKING AVAILABLE A PLUG-IN CARD EQUIPPED WITH AN IDENTIFICATION TO A MOBILE RADIO TERMINAL
PROCEDE POUR METTRE A DISPOSITION DES CARTES A INSERER DOTEES D'UNE MARQUE D'IDENTIFICATION, DANS UN TERMINAL MOBILE

(30) Priorität: 12.03.2003 DE 10311980
(43) Veröffentlichungstag der Anmeldung: 07.12.2005
(73) Patentinhaber: Teles AG Informationstechnologien, 10587 Berlin (DE)
(72) Erfinder: PAETSCH, Frank, 12357 Berlin (DE); BASTIAN, Jan, 13437 Berlin (DE)
(74) Vertreter: Maikowski, Michael
(86) Internationale Anmeldenummer: PCT/DE2004/000554
(87) Internationale Veröffentlichungsnummer: WO 2004/082314

(56) Entgegenhaltungen:
- WO-A-02/41597
- WO-A-99/25140
- US-A- 5 603 084
- US-A- 5 742 910
- US-A- 6 134 435

## Beschreibung

Die Erfindung betrifft ein Verfahren zum Bereitstellen von mit einer Kennung versehenen Einsteckkarten in einem Mobilfunkendgerät, eine Telekommunikationsanordnung zur Durchführung des Verfahrens und einen Computer und ein Mobilfunkendgerät zur Verwendung in einem solchen Verfahren.

### Hintergrund der Erfindung

Es ist bekannt, ein Mobilfunkendgerät mit einer sogenannten SIM-Karte zu versehen. Eine SIM-Karte ist eine Einsteckkarte mit einer Kennung, über die ein Mobilfunkendgerät einem bestimmten Netzbetreiber zugeordnet ist, eine bestimmte Rufnummer erhält und in allen Mobilfunknetzen eindeutig identifizierbar ist. Darüber hinaus weist eine SIM-Karte eine PIN-Nummer (PIN - Personal Identity Number), sicherheitsrelevante Daten wie Kommunikationsschlüssel und Sicherheitsalgorithmen, nutzerspezifische Daten wie Kurzwahlnummern sowie netzspezifische Daten wie die Kennung des aktuellen Aufenthaltsbereiches auf. Eine SIM-Karte personalisiert ein Mobilfunkendgerät hinsichtlich des Nutzers und hinsichtlich des Netzbetreibers und ermöglicht die Abrechnung von Gesprächsgebühren von dem Netzbetreiber.

Nachteilig ist der Einsatz eines Mobilfunkendgeräts häufig sehr kostenintensiv, wenn das Mobilfunkendgerät sich nicht in dem Mobilfunknetz befindet, das der verwendeten SIM-Karte zugeordnet ist. Es können dann hohe Roaming-Gebühren auftreten, etwa bei einem Aufenthalt im Ausland. Darüber hinaus besteht für das Mobilfunkendgerät nicht die Möglichkeit, kostengünstige Verbindungen anderer Netzbetreiber zu nutzen.

In der WO 99/25140 A1 wird eine SIM-Karte beschrieben, die einen Speicherbereich zur Speicherung von Identifikationsparametern aufweist, um den Nutzer des entsprechenden Mobilfunkendgerätes in anderen Systemen (z.B. in einem anderen Mobilfunknetz, in einem Pay-TV-System oder einem Computernetzwerk) zu identifizieren, d.h. in Systemen, die sich von dem durch die Kennung ursprünglich zugeordneten System unterscheiden. Die Identifikationsparameter können von einem SIM-Server geladen werden. Somit wird eine Funktionserweiterung der SIM-Karte dahingehend erreicht, dass sie einem Nutzer die Möglichkeit bietet, sich auch in anderen Systemen zu identifizieren.

In der US 5 742 910 A wird ein Verfahren zum ferngesteuerten Programmieren einer SIM-Karte beschrieben, wobei sich ein Mobiltelefon über eine vorhandene SIM-Karte in einem Kontrollzentrum einwählt. Falls in einer Datenbank des Kontrollzentrums bestimmte Service-Parameter für den Nutzer des Mobiltelefons vorliegen, so werden diese an das Mobiltelefon übertragen, um den Inhalt der SIM-Karte entsprechend zu modifizieren. Somit wird das Übersenden und Modifizieren von speziellen Parametern einer bereits vorhandenen SIM-Karte im Mobiltelefon ermöglicht.

### Aufgabe der Erfindung

Der vorliegenden Erfindung liegt die Aufgabe zu Grunde, ein Verfahren zum Bereitstellen von mit einer Kennung versehenen Einsteckkarten in einem Mobilfunkendgerät zur Verfügung zu stellen, die eine Reduzierung der bei der Nutzung eines Mobilfunkendgerätes auftretenden Kosten bewirken und gleichzeitig ein hohes Maß an Flexibilität bei der Nutzung von Mobilfunknetzen bereitstellen. Des weiteren sollen eine Telekommunikationsanordnung zur Durchführung eines solchen Verfahrens und Einrichtungen zur Verwendung in einem solchen Verfahren bereitgestellt werden.

### Zusammenfassung der Erfindung

Diese Aufgabe wird erfindungsgemäß durch ein Verfahren mit den Merkmalen des Anspruchs 1, eine Telekommunikationsanordnung mit den Merkmalen des Anspruchs 6, einen Computer mit den Merkmalen des Anspruchs 7 und ein Mobilfunkendgerät mit den Merkmalen des Anspruchs 8 gelöst. Bevorzugte und vorteilhafte Ausgestaltungen der Erfindungen sind in den Unteransprüchen angegeben.

Danach zeichnet sich die erfindungsgemäße Lösung dadurch aus, dass auf einem zentralen Computer eine Mehrzahl von Einsteckkarten zentral verwaltet und bereitgestellt werden. Jede Einsteckkarte enthält Identifikationsdaten, durch die jeweils eine Zuordnung zu und Anmeldung eines Mobilfunkendgerätes bei einem Mobilfunknetz ermöglicht wird. Auf eine Aufforderung durch ein Mobilfunkendgerät werden die Identifikationsdaten einer Einsteckkarte sowie Authentifizierungsdaten per Datenfernübertragung an das Mobilfunkendgerät übertragen und auf diese Weise bei diesem bereitgestellt. In dem Mobilfunkendgerät ist physisch keine einzige Einsteckkarte vorgesehen.

Die erfindungsgemäße Lösung beruht auf dem Gedanken, Einsteckkarten für die Mobilfunkkommunikation nicht wie bisher in dem Mobilfunkendgerät bereitzustellen, sondern an einem zentralen Ort bzw. einem zentralen Computer. Je nach Anforderung und Bedarf wird eine Einsteckkarte seitens des Mobilfunkendgerätes von dem zentralen Computer angefordert und von diesem dem Mobilfunkendgerät für eine bestimmte Zeit bereitgestellt. Dieses Bereitstellen der Einsteckkarte für die Mobilfunkkommunikation erfolgt natürlich nicht physisch. Es werden lediglich die Informationen, die eine Einsteckkarte identifizieren und deren Funktionalität wiederspiegeln, per Datenfernübertragung an das Mobilfunkendgerät übertragen.

Die Einsteckkarte für die Mobilfunkkommunikation befindet sich gewissermaßen virtuell auf einem zentralen Computer und ihre Funktionalität wird bei Bedarf auf dem Mobilfunkendgerät auf der Grundlage spezifischer Informationen und Daten, die vom zentralen Computer übertragen werden, emuliert.

Das Verfahren ermöglicht die Verwendung eines zentralen Einsteckkarten-Pools für mehrere Mobilfunknutzer. Es besteht somit die Möglichkeit, einem Mobilfunkteilnehmer eine Vielzahl von Einsteckkarten z.B. für unterschiedliche Länder und unterschiedliche Mobilfunknetze bedarfsweise zur Verfügung zu stellen. Des weiteren wird eine wesentlich einfachere Abrechnung und eine einfachere Verwaltung der Einsteckkarte ermöglicht, da diese Informationen sogleich an einen zentralen Computer anfallen. Dies spart weitere Kosten.

Insgesamt wird ein hochgradig flexibles neues System bereitgestellt, bei dem die Einsteckkarte für die Mobilfunkkommunikation nicht mehr auf dem Mobilfunkendgerät bereitgestellt werden muss, sondern nach Bedarf von einem zentralen Computer, der eine Mehrzahl von Einsteckkarten zentral verwaltet, bereitgestellt wird.

In einer bevorzugten Ausgestaltung der Erfindung werden die Authentifizierungsdaten bei jedem Verbindungsaufbau aktuell an das Mobilfunknetz übertragen. Authentifizierungsdaten im Sinne der vorliegenden Erfindungen sind sämtliche solche Daten, die individuell für eine konkrete Mobilfunkverbindung zwischen einem Mobilfunkendgerät und einer Basisstation eines Funknetzes erzeugt werden müssen, insbesondere um eine Authentisierung gegen unberechtigten Zugriff bereitzustellen. Es ist beispielsweise denkbar, dass ein Mobilfunkendgerät für einen längeren Zeitraum von beispielsweise einer Woche eine Einsteckkarten bei einem zentralen Computer nutzt/mietet. Bestimmte Daten wie die Rufnummer der SIM-Karte können dabei einmalig an den Nutzer übertragen werden. Sofern keine weiteren Daten für einen Verbindungsaufbau benötigt werden, ist nichts weiter zu veranlassen.

Sofern jedoch, wie meist üblich, vom Mobilfunknetz zusätzliche Sicherheits-Authentifizierungsdaten für jeden individuellen Ruf oder nach einer gewissen Zeitspanne verlangt werden, die über spezielle Algorithmen in der Einsteckkarte erzeugt werden, müssen diese Authentifizierungsdaten bei jedem Verbindungsaufbau bzw. nach Ablauf einer Zeitspanne erzeugt werden. Sie werden in der Einsteckkarte im zentralen Computer erzeugt und dann an das Mobilfunkendgerät, wiederum über Datenfernübertragung, übertragen.

Die Datenfernübertragung an das Mobilfunkendgerät erfolgt bevorzugt über einen Computernetzwerk, ein Telefonfestnetz, Radio- oder Fernsehsignale oder über ein Mobilfunknetz. Beispielsweise ist das Mobilfunkendgerät über eine Schnittstelle mit einem Computer verbunden, der wiederum über das Internet mit dem zentralen Computer verbindbar ist. Auch kann der Computer oder das Mobilfunkendgerät direkt über ein Modem mit dem zentralen Computer verbunden sein. Eine andere Möglichkeit der Bereitstellung der Identifikationsdaten und Authentifizierungsdaten einer Einsteckkarte des zentralen Computers beim Mobilfunkendgerät besteht in einem Broadcasting der entsprechenden Daten, wobei die Daten dann natürlich eine Kennung erhalten, die sie einem bestimmten Mobilfunkendgerät zuordnen. Beispielsweise werden die Daten in Radiosignale oder Fernsehsignale eingefügt, beispielsweise in die vertikale Austastlücke des analogen Fernsehsignals.

Die entsprechenden Daten werden beim Mobilfunkgerät oder einer dieser zugeordneten Einheit erfasst, als zum Mobilfunkendgerät zugehörend erkannt, extrahiert und an das Mobilfunkendgerät geleitet. Schließlich und bevorzugt ist vorgesehen, die Daten über ein Mobilfunknetz an das Mobilfunkendgerät zu übertragen.

Das Mobilfunkendgerät weist mindestens ein Funkmodul auf, dem die jeweils bereitgestellte Einsteckkarte zugeordnet ist.

Eine erfindungsgemäße Telekommunikationsanordnung zur Durchführung des Verfahrens weist einen Computer auf, der eine Mehrzahl von Einsteckkarten zentral verwaltet und bereitstellt sowie eine Mehrzahl von Mobilfunkendgeräten. Auf die Anfrage eines Mobilfunkendgerätes hin überträgt der Computer die Identifikationsdaten einer Einsteckkarte sowie Authentifizierungsdaten per Datenfernübertragung an das Mobilfunkgerät. Das Anfragemobilfunkendgerät nutzt die erhaltenen Informationen dann zur Mobilfunkkommunikation. In dem Mobilfunkendgerät ist keine einzige Einsteckkarte vorgesehen.

Es wird eine völlig neue Telekommunikationsanordnung bereitgestellt, bei der die Einsteckkarten zentral auf einem Computer bzw. Server verwaltet werden. Hierdurch wird ein hohes Maß an Flexibilität in der Nutzung alternativer Einsteckkarten für die Mobilfunkkommunikation ermöglicht.

Das erfindungsgemäße Mobilfunkendgerät weist Mittel zur Kommunikation mit einem Computer auf. Diese Mittel umfassen Mittel zum Anfordern der Daten einer auf dem Computer verwalteten Einsteckkarte sowie von Authentifizierungsinformationen und Mittel zum Erhalten der entsprechenden, vom Computer an das Mobilfunkendgerät übertragenen Daten. Des weiteren weist das Mobilfunkendgerät Mittel zum Zuordnen der erhaltenen Daten zu einem Funkmodul auf. In dem Mobilfunkendgerät ist keine einzige Einsteckkarte vorgesehen.

### Beschreibung mehrerer Ausführungsbeispiele

Die Erfindung wird nachfolgend unter Bezugnahme auf die Figuren der Zeichnung näher erläutert. Es zeigen:
- Figur 1 -: ein Mobilfunkendgerät, das neben einer im Mobilfunkendgerät vorhandenen Einsteckkarte eine auf einem zentralen Computer verwaltete Einsteckkarte aktivieren kann,
- Figur 2 -: eine zweite Ausführung eines derartigen Mobilfunkendgerätes und
- Figur 3 -: eine Telekommunikationsanordnung mit einem Mobilfunkendgerät, einem Datenübertragungsnetz und einem zentralen Computer, der eine Vielzahl von Einsteckkarten für die Mobilfunkkommunikation verwaltet und bereitstellt.

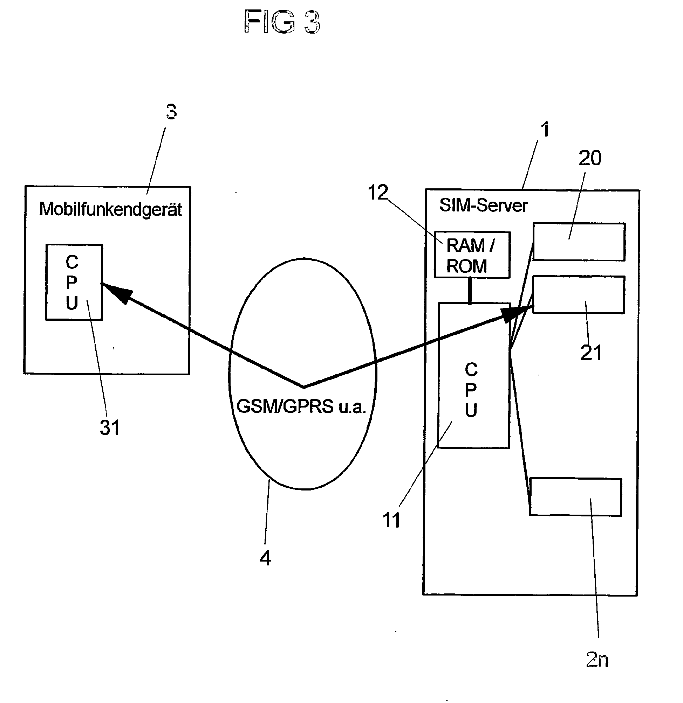

Anhand der Figur 3 wird zunächst der grundlegende Aufbau einer Telekommunikationsanordnung beschrieben, die den Einsatz zentral verwalteter Einsteckkarten in einem Mobilfunkendgerät ermöglicht. Bei den Einsteckkarten handelt es sich, wie in der derzeitigen Mobilfunkkommunikation üblich, um so genannte SIM-Karten, die eingangs erläutert worden sind.

Auf einem zentralen Computer 1, im folgenden auch als SIM-Server bezeichnet, befinden sich eine zentrale Steuereinheit 11 mit einem zugeordneten Speicher 12 sowie eine Vielzahl von SIM-Kartenleseeinrichtungen 20, 21, 2n, in die jeweils eine SIM-Karte einsetzbar ist. Bevorzugt sind dabei eine Vielzahl von SIM-Kartenleseeinrichtungen mit einer Vielzahl unterschiedlicher SIM-Karten unterschiedlicher Länder und Mobilfunknetze im SIM-Server vorgesehen. Über die zentrale Steuerung 11 werden die einzelnen SIM-Karten verwaltet.

Ein Mobilfunkendgerät 3 weist in bekannter Weise ebenfalls eine zentrale Steuereinrichtung 31 auf. Die zentrale Steuereinrichtung 31 kann nun über ein beliebiges Datenübertragungsnetz 4 eine Anfrage bzw. eine Anforderung an den SIM-Server 1 richten, dem Mobilfunkendgerät 3 eine SIM-Karte zur Verfügung zu stellen. Die Anfrage identifiziert dabei möglichst das Mobilfunknetz, dem die bereitzustellende SIM-Karte angehören soll. Alternativ werden andere Informationen in der Anfrage mit übertragen, die eine bestimmte SIM-Karte bzw. eine bestimmte Klasse von SIM-Karten identifizieren.

Die zentrale Steuereinrichtung 11 des SIM-Servers 1 sucht auf der Grundlage der Anforderungskriterien eine bestimmte SIM-Karte für die Bereitstellung eines Mobilfunkendgerätes 3 aus. Die Identifikationsdaten sowie ggf. Authentifizierungsdaten werden von der SIM-Kartenleseeinrichtung 20, 21, 2n aus der entsprechenden SIM-Karte ausgelesen und an die zentrale Steuereinrichtung 11 geleitet. Von dieser werden sie über das Datenübertragungsnetz 4 an die zentrale Steuereinrichtung 31 des Mobilfunkendgerätes übertragen und dort einem Funkmodul bereitgestellt.

Dabei ist es durchaus möglich, dass insbesondere bei einem Rufaufbau Authentifizierungsinformationen aktuell vom Mobilfunkendgerät 3 beim SIM-Server 1 abgerufen werden. Diese Authentifizierungsinformationen werden in der entsprechenden SIM-Karte erzeugt, durch die entsprechende SIM-Kartenleseeinrichtung ausgelesen und an das Mobilfunkendgerät 3 übertragen.

Das verwendete Datenübertragungsnetz kann grundsätzlich beliebig sein. Beispielsweise handelt es sich um ein Mobilfunknetz auf der Basis von GSM, GPRS und anderem. Grundsätzlich können die Daten auch über Broadcasting, Modemverbindungen, paketvermittelte Verbindungen etc. übertragen werden.

Gemäß der Erfindung ist im Mobilfunkendgerät keine einzige SIM-Karte fest bzw. physisch vorgesehen, die bei jeder Verbindung von dem zentralen SIM-Server 1 angefordert wird. Eine Datenübertragung zwischen dem Mobilfunkendgerät und dem SIM-Server erfolgt über ein Computernetzwerk, an das das Mobilfunkendgerät angeschlossen ist.

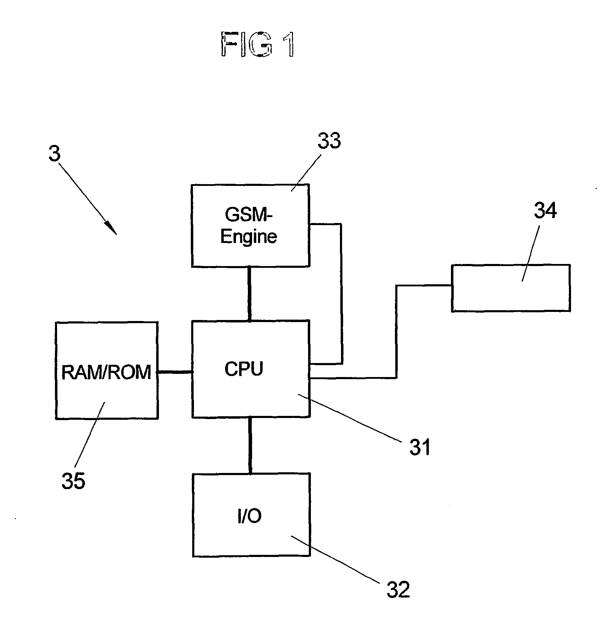

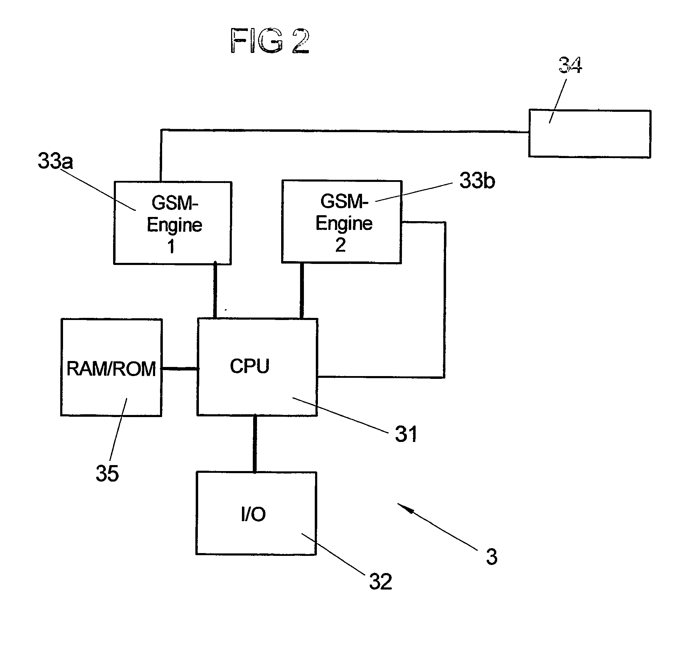

Die Figuren 1 und 2 beziehen sich nicht auf die Erfindung und dienen lediglich der Erläuterung des Hintergrundes der Erfindung.

Die Figur 1 zeigt eine erste Ausführungsform eines Mobilfunkendgerätes 3. Neben der zentralen Steuereinheit CPU 31 mit einem zugeordneten Speicher 35 sind eine Eingabe/Ausgabeeinheit 32, ein Funkmodul 33 und eine SIM-Kartenleseeinrichtung 34 vorgesehen, die alle mit der zentralen Steuereinrichtung 31 verbunden sind. Bei dem Funkmodul handelt es sich entsprechend dem im Mobilfunkbereit vorherrschenden Standard um ein GSM-Modul (GSM - Global System for mobile Communikation), das auch als GSM-Engine bezeichnet wird. Das GSM-Modul 33 sendet und empfängt Funkdaten auf einem Nutzkanal des Mobilfunknetzes.

Einem GSM-Modul 33 ist dabei stets eine SIM-Karte zugeordnet. Eine entsprechende SIM-Karte befindet sich in der SIM-Kartenleseeinrichtung 34. GSM-Modul 33 und SIM-Karte bilden jeweils eine Mobilstation eines Mobilfunknetzes aus und wirken notwendig zusammen bei der Herstellung einer Mobilfunkverbindung.

Die SIM-Kartenleseeinrichtung ist allerdings anders als im Stand der Technik üblich nicht direkt mit dem GSM-Modul 33 verbunden. Vielmehr werden ihre Daten zunächst in die zentrale Steuereinrichtung 31 geleitet.

Sofern die Steuereinrichtung 31 einen Wechsel der verwendeten SIM-Karte veranlasst, beispielsweise da über die SIM-Karte eines anderen Mobilfunknetzes ein aufzubauender Ruf kostengünstiger bereitgestellt werden kann, so fordert die zentrale Steuereinrichtung 31 gemäß Figur 3 von dem zentralen SIM-Server 1 eine SIM-Karte an, die dem gewünschten Netz zugeordnet ist. Zur Identifizierung und Auswahl eines gewünschtes Netzes weist die zentrale Steuereinrichtung 31 dabei bevorzugt eine Software für ein Least-Cost-Routing auf, wie sie an sich bekannt ist und daher nicht näher beschrieben wird.

Der SIM-Server 1 überträgt die angeförderten Daten einer SIM-Karte nun an die zentrale Steuereinrichtung 31 des Mobilfunkendgerätes 3. Diese Datenübertragung erfolgt bevorzugt über den schon vorhandenen Mobilfunkkanal, d.h. unter Verwendung der in der SIM-Kartenleseeinrichtung 34 eingesetzten SIM-Karte und dem Funkmodul 33. Die entsprechenden Daten werden in der zentralen Steuereinrichtung 31 gespeichert. Neben Daten, die die angeforderte SIM-Karte identifizieren, werden dabei ggf. auch Authentifizierungsinformationen an das Mobilfunkendgerät 3 übertragen, die spezifisch für eine aufzubauende Verbindung bereitzustellen sind, um Sicherheitsanforderungen gegen einen unberechtigten Zugriff zu genügen. Sobald die zentrale Steuereinrichtung 31 alle erforderlichen Informationen erhalten hat, wechseltest sie die Einsteckkarte. Hierzu wird die vorhandene SIM-Karte, die sich in der Einrichtung 34 befindet, deaktiviert. Die vom SIM-Server 1 erhaltenen Informationen werden nun von der Steuereinrichtung 31 an das GSM-Modul 33 gesandt. Die Steuereinrichtung 31 emuliert dabei gewissermaßen die im zentralen Server 1 befindliche SIM-Karte. Es kann nun eine Mobilfunkverbindung auf der Basis der im zentralen Server 1 befindliche SIM-Karte über das entsprechende Mobilfunknetz zu einem gerufenen Teilnehmer erfolgen.

Die Figur 2 zeigt eine leichte Variation des Mobilfunkendgerätes des Figur 1. Es sind bei dieser Ausgestaltung zwei GSM-Module 33a, 33b vorgesehen. Das eine GSM-Modul 33a ist fest mit der SIM-Karte bzw. der Leseeinrichtung 34 verbunden, wobei die Verbindung bei dieser Ausgestaltung unmittelbar vorliegt. Identifikations- und Authentifizierungsdaten der in die Einrichtung 34 eingesteckten SIM-Karte werden erfasst und an das GSM-Modul 33a übertragen.

Das zweite GSM-Modul 33b wird dagegen allein mit Daten versorgt, die die zentrale Steuereinrichtung 31 von dem SIM-Server 1 der Figur 3 angefordert hat. Wie in Figur 1 beschrieben, wird somit wiederum das Vorhandensein einer SIM-Karte auf dem Mobilfunkendgerät 3 emuliert, während sich die SIM-Karte tatsächlich auf dem zentralen SIM-Server befindet. Diese Ausgestaltung weist den Vorteil auf, dass auch bei Nutzung einer auf dem SIM-Server 1 verwalteten SIM-Karte für abgehende Rufe eingehende Rufe noch über die vorhandene SIM-Karte und das GSM-Modul 33a bearbeitet werden können. Auch kann diese zusätzliche Verbindung spezifisch dazu benutzt werden, Identifikations- und Authentifizierungsinformationen vom SIM-Server 1 zum Mobilfunkendgerät 3 herunterzuladen.

## Patentansprüche

1. Verfahren zum Bereitstellen einer mit einer Kennung versehenen Einsteckkarte (20, 21, 2n) in einem Mobilfunkendgerät (3), bei dem
- in einem zentralen Computer (1) eine Mehrzahl von Einsteckkarten (20, 21, 2n) zentral verwaltet und bereitgestellt werden,
- von denen jede Identifikationsdaten enthält, durch die eine Einsteckkarte (20, 21, 2n) jeweils eine Zuordnung zu und Anmeldung eines Mobilfunkendgeräts bei einem Mobilfunknetz ermöglicht,
- wobei die Identifikationsdaten einer Einsteckkarte (20, 21, 2n) sowie Authentifizierungsinformationen auf eine Aufforderung durch das Mobilfunkendgerät (3) per Datenfernübertragung an das Mobilfunkendgerät (3) übertragen und auf diese Weise bei diesem bereitgestellt werden, und
- im Mobilfunkendgerät (3) physisch keine einzige Einsteckkarte (20, 21, 2n) vorgesehen ist.

2. Verfahren nach Anspruch 1, **dadurch gekennzeichnet, dass** die Authentifizierungsdaten bei jedem Verbindungsaufbau oder nach Ablauf einer gewissen Zeitspanne aktuell an das Mobilfunkendgerät (3) übertragen werden.

3. Verfahren nach Anspruch 1 oder 2, **dadurch gekennzeichnet, dass** die Datenfernübertragung an das Mobilfunkendgerät (3) über ein Computernetzwerk oder das Telefonfestnetz oder Radio- oder Fernsehsignale erfolgt.

4. Verfahren nach mindestens einem der vorangehenden Ansprüche, **dadurch gekennzeichnet, dass** das Mobilfunkendgerät (3) ein Funkmodul (33) aufweist, dem die jeweils bereitgestellte Einsteckkarte zugeordnet ist.

5. Verfahren nach mindestens einem der vorangehenden Ansprüche, **dadurch gekennzeichnet, dass** der zentrale Computer (1) ein Einsteckkarten-Pool verwaltet, dessen Einsteckkarten einer Vielzahl von Nutzern bedarfsabhängig bereitgestellt werden.

6. Telekommunikationsanordnung zur Durchführung des Verfahrens gemäß Anspruch 1, aufweisend:
- einen Computer (1), der Mittel zum zentralen Verwalten und Bereitstellen einer Mehrzahl von Einsteckkarten (20, 21, 2n) aufweist, von denen jede Identifikationsdaten enthält, durch die eine Einsteckkarte (20, 21, 2n) jeweils eine Zuordnung zu und Anmeldung eines Mobilfunkendgeräts (3) bei einem Mobilfunknetz ermöglicht, und
- eine Mehrzahl von Mobilfunkendgeräten (3), wobei
- der Computer (1) Mittel aufweist, die auf die Anfrage eines Mobilfunkendgeräts (3) hin die Identifikationsdaten einer Einsteckkarte sowie Authentifizierungsdaten per Datenfernübertragung an das Mobilfunkendgerät (3) übertragen,
- das anfragende Mobilfunkendgerät (3) Mittel aufweist, die die erhaltenen Informationen zur Mobilfunkkommunikation nutzen, und
- im Mobilfunkendgerät (3) physisch keine einzige Einsteckkarte (20, 21, 2n) vorgesehen ist.

7. Computer zur Durchführung des Verfahrens gemäß Anspruch 1, mit einer Mehrzahl von Einsteckkarten (20, 21, 2n) für die Mobilkommunikation, von denen jede Identifikationsdaten enthält, durch die eine Einsteckkarte (20, 21, 2n) jeweils eine Zuordnung zu und Anmeldung eines Mobilfunkendgeräts (3), das physisch keine einzige Einsteckkarte (20, 21, 2n) aufweist, bei einem Mobilfunknetz ermöglicht, wobei der Computer (1) Mittel aufweist, die auf die Anfrage eines Mobilfunkendgeräts hin die Identifikationsdaten einer Einsteckkarte eines angeforderten Mobilfunknetzes sowie Authentifizierungsdaten per Datenfernübertragung an das Mobilfunkendgerät überträgt.

8. Mobilfunkendgerät zur Durchführung des Verfahrens gemäß Anspruch 1, aufweisend:
- Mittel (31) zur Kommunikation mit einem Computer (1), der eine Mehrzahl von Einsteckkarten zentral verwaltet und bereitgestellt, von denen jede Identifikationsdaten enthält, durch die eine Einsteckkarte (20, 21, 2n) jeweils eine Zuordnung zu und Anmeldung eines Mobilfunkendgeräts (3) bei einem Mobilfunknetz ermöglicht, wobei diese Mittel umfassen
- Mittel (31, 33, 33a, 33b, 34) zum Anfordern der Identifikationsdaten einer auf dem zentralen Computer (1) verwalteten Einsteckkarte sowie von Authentifizierungsinformationen zu einer mit der angeforderten Einsteckkarte aufzubauenden Verbindung und
- Mittel (31, 33, 33a, 33b, 34) zum Erhalten der entsprechenden, vom Computer an das Mobilfunkendgerät übertragenen Daten, und
- Mittel (31) zum Zuordnen der erhaltenen Daten zu einem Funk-Modul (33),
- wobei im Mobilfunkendgerät (3) physisch keine einzige Einsteckkarte (20, 21, 2n) vorgesehen ist.

9. Mobilfunkendgerät nach Anspruch 8, **dadurch gekennzeichnet, dass** das Mobilfunkendgerät (3) eine Mobiltelefon ist.

10. Mobilfunkendgerät nach Anspruch 8 oder 9, **dadurch gekennzeichnet, dass** die Einsteckkarten jeweils SIM-Karten sind.

11. Mobilfunkendgerät nach mindestens einem der Ansprüche 8 bis 10, **dadurch gekennzeichnet, dass** das Mobilfunkendgerät (3) mindestens ein Funkmodul (33; 33a, 33b) aufweist.

## Claims

1. Method for providing a plug-in card (20, 21, 2n), provided with an identifier, in a mobile radio terminal (3), in which
- a central computer (1) manages and provides a plurality of plug-in cards (20, 21, 2n) centrally,
- each of which contains identification data which allow a plug-in card (20, 21, 2n) respective association with and registration of a mobile radio terminal in a mobile radio network,
- wherein the identification data on a plug-in card (20, 21, 2n) and authentication information are transmitted upon a request by the mobile radio terminal (3) by remote data transmission to the mobile radio terminal (3) and in this way are provided thereon, and
- the mobile radio terminal (3) physically does not contain a single plug-in card (20, 21, 2n).

2. Method according to Claim 1, **characterized in that** the authentication data are transmitted to the mobile radio terminal (3) up-to-date whenever a connection is set up or when a certain time period has elapsed.

3. Method according to Claim 1 or 2, **characterized in that** the remote data transmission to the mobile radio terminal (3) is effected by means of a computer network or the telephone landline network or radio or television signals.

4. Method according to at least one of the preceding claims, **characterized in that** the mobile radio terminal (3) has a radio module (33) which has the respectively provided plug-in card associated with it.

5. Method according to at least one of the preceding claims, **characterized in that** the central computer (1) manages a plug-in card pool, the plug-in cards of which are provided for a multiplicity of users on the basis of need.

6. Telecommunication arrangement for carrying out the method according to Claim 1, having:
- a computer (1) which has means for the central management and provision of a plurality of plug-in cards (20, 21, 2n), each of which contains identification data which allow a plug-in card (20, 21, 2n) respective association with and registration of a mobile radio terminal (3) in a mobile radio network, and
- a plurality of mobile radio terminals (3), wherein
- the computer (1) has means which, upon the request of a mobile radio terminal (3), transmit the identification data from a plug-in card and authentication data by remote data transmission to the mobile radio terminal (3),
- the requesting mobile radio terminal (3) has means which use the information obtained for the purpose of mobile radio communication, and
- the mobile radio terminal (3) does not physically contain a single plug-in card (20, 21, 2n).

7. Computer for carrying out the method according to Claim 1, having a plurality of plug-in cards (20, 21, 2n) for the mobile communication, each of which contains identification data which allow a plug-in card (20, 21, 2n) respective association with and registration of a mobile radio terminal (3), which does not physically contain a single plug-in card (20, 21, 2n), in the mobile radio network, wherein the computer (1) has means which, upon the request of a mobile radio terminal, transmit the identification data from a plug-in card of a requested mobile radio network and authentication data by remote data transmission to the mobile radio terminal.

8. Mobile radio terminal for carrying out the method according to Claim 1, having:
- means (31) for communicating with a computer (1) which manages and provides a plurality of plug-in cards centrally, each of which contains identification data which allow a plug-in card (20, 21, 2n) respective association with and registration of a mobile radio terminal (3) in a mobile radio network, wherein these means comprise
- means (31, 33, 33a, 33b, 34) for requesting the identification data from a plug-in card managed on the central computer (1) and authentication information for a connection which is to be set up to the requested plug-in card, and
- means (31, 33, 33a, 33b, 34) for obtaining the relevant data transmitted from the computer to the mobile radio terminal, and
- means (31) for associating the data obtained with a radio module (33),
- wherein the mobile radio terminal (3) does not physically contain a single plug-in card (20, 21, 2n).

9. Mobile radio terminal according to Claim 8, **characterized in that** the mobile radio terminal (3) is a mobile telephone.

10. Mobile radio terminal according to Claim 8 or 9, **characterized in that** the plug-in cards are respectively SIM cards.

11. Mobile radio terminal according to at least one of Claims 8 to 10, **characterized in that** the mobile radio terminal (3) has at least one radio module (33; 33a, 33b).

## Revendications

1. Procédé destiné à mettre à disposition une carte enfichable (20, 21, 2n) prévue avec un code d'identification dans un terminal radio mobile (3), dans le cadre duquel
- une pluralité de cartes enfichables (20, 21, 2n) sont gérées et mises à disposition de manière centralisée dans un ordinateur central (1),
- dont chacune contient des données d'identification, grâce auxquelles une carte enfichable (20, 21, 2n) permet respectivement une attribution et une demande d'un terminal radio mobile auprès d'un réseau de téléphonie mobile,
- les données d'identification d'une carte enfichable (20, 21, 2n) ainsi que des informations d'authentification relatives à une demande par le terminal radio mobile (3) sont transmises par télétransmission de données au terminal radio mobile (3) et sont ainsi mises à disposition sur celui-ci, et
- aucune carte enfichable (20, 21, 2n) unique n'est physiquement prévue dans le terminal radio mobile (3).

2. Procédé selon la revendication 1, **caractérisé en ce que** les données d'authentification sont réellement transmises au terminal radio mobile (3) lors de chaque établissement de connexion ou après expiration d'un certain intervalle de temps.

3. Procédé selon la revendication 1 ou 2, **caractérisé en ce que** la télétransmission de données au terminal radio mobile (3) s'effectue via un réseau informatique ou le réseau de téléphonie ou par le biais de signaux radio ou vidéo.

4. Procédé selon au moins l'une quelconque des revendications précédentes, **caractérisé en ce que** le terminal radio mobile (3) comprend un module radio (33), auquel est affectée la carte enfichable respective mise à disposition.

5. Procédé selon au moins l'une quelconque des revendications précédentes, **caractérisé en ce que** l'ordinateur central (1) gère un pool de cartes enfichables, dont les cartes enfichables sont mises à disposition d'un grand nombre d'utilisateurs selon les besoins.

6. Dispositif de télécommunication destiné à réaliser le procédé selon la revendication 1, présentant :
- un ordinateur (1), qui comprend des moyens pour gérer et mettre à disposition de manière centralisée une pluralité de cartes enfichables (20, 21, 2n), dont chacune contient des données d'identification, grâce auxquelles une carte enfichable (20, 21, 2n) permet respectivement une attribution et une demande d'un terminal radio mobile (3) auprès d'un réseau de téléphonie mobile, et
- une pluralité de terminaux radio mobiles (3),
- l'ordinateur (1) comprenant des moyens qui transmettent au terminal radio mobile (3), à la demande d'un terminal radio mobile (3), les données d'identification d'une carte enfichable ainsi que des données d'authentification par télétransmission,
- le terminal radio mobile (3) demandeur comprenant des moyens qui utilisent les informations contenues pour la communication de téléphonie mobile, et
- aucune carte enfichable (20, 21, 2n) unique n'étant physiquement prévue dans le terminal radio mobile (3).

7. Ordinateur destiné à réaliser le procédé selon la revendication 1, comportant une pluralité de cartes enfichables (20, 21, 2n) pour la communication mobile, dont chacune contient des données d'identification, grâce auxquelles une carte enfichable (20, 21, 2n) permet respectivement une attribution et une demande d'un terminal radio mobile (3), qui ne présente aucune carte enfichable (20, 21, 2n) unique physique, auprès d'un réseau de téléphonie mobile, l'ordinateur (1) comprenant des moyens qui transmettent, à la demande d'un terminal radio mobile, les données d'identification d'une carte enfichable d'un réseau de téléphonie mobile demandeur ainsi que des données d'authentification par télétransmission des données au terminal radio mobile.

8. Terminal radio mobile destiné à réaliser le procédé selon la revendication 1, présentant :
- des moyens (31) de communication avec un ordinateur (1), lequel gère et met à disposition de manière centralisée une pluralité de cartes enfichables, dont chacune contient des données d'identification, grâce auxquelles une carte enfichable (20, 21, 2n) permet respectivement une attribution et une demande d'un terminal radio mobile (3) auprès d'un réseau de téléphonie mobile, ces moyens comportant :
- des moyens (31, 33, 33a, 33b, 34) destinés à demander les données d'identification d'une carte enfichable gérée sur l'ordinateur central (1) ainsi que des informations d'authentification d'une liaison en cours d'établissement avec la carte enfichable demandeuse et
- des moyens (31, 33, 33a, 33b, 34) destinés à obtenir les données correspondantes transmises par l'ordinateur au terminal radio mobile, et
- des moyens (31) destinés à attribuer les données obtenues à un module radio (33),
- aucune carte enfichable (20, 21, 2n) unique n'étant physiquement prévue dans l'appareil mobile (3).

9. Terminal radio mobile selon la revendication 8, **caractérisé en ce que** le terminal radio mobile (3) est un téléphone portable.

10. Terminal radio mobile selon la revendication 8 ou 9, **caractérisé en ce que** les cartes enfichables sont respectivement des cartes SIM.

11. Terminal radio mobile selon au moins l'une quelconque des revendications 8 à 10, **caractérisé en ce que** le terminal radio mobile (3) présente au moins un module radio (33 ; 33a, 33b).
